# EUROPÄISCHE PATENTSCHRIFT

(11) **EP 2 215 944 B1**
(45) Veröffentlichungstag und Bekanntmachung des Hinweises auf die Patenterteilung: **22.08.2012**
(21) Anmeldenummer: 10152896.6
(22) Anmeldetag: 08.02.2010
(51) Int. Cl.: A47J 47/16

(54) **Halter einer Aufhängeinrichtung für Küchenutensilien**
Holder of a hanger device for kitchen utensils
Support d'un dispositif de suspension pour ustensiles de cuisine

(30) Priorität: 10.02.2009 DE 102009008180
(43) Veröffentlichungstag der Anmeldung: 11.08.2010
(73) Patentinhaber: Metallwarenfabrik Marktoberdorf GmbH & Co. KG, 87616 Marktoberdorf (DE)
(72) Erfinder: Schneider, Paul, 87471 Durach (DE)
(74) Vertreter: Tiesmeyer, Johannes

(56) Entgegenhaltungen:
- WO-A1-2007/083005
- DE-U1- 29 603 305
- DE-U1- 29 709 030

## Beschreibung

Die vorliegende Erfindung betrifft einen Halter einer Aufhängeinrichung für Küchenutensilien, wobei der Halter an einer Wand befestigbar ist und derart ausgebildet ist, dass an ihm wenigstens eine Aufhängleiste zum Anhängen von Küchenutensilien anbringbar ist, und wobei der Halter ein Verschlusselement umfasst, das eine im Halter aufgenommene Aufhängleiste abdeckt und diese gegen Herausfallen aus einer am Halter ausgebildeten Leistenaufnahme sichert.

Ein derartiger Halter ist aus der WO 2007/083005 A1 bekannt. Bei der dort vorgestellten Aufhängeinrichung ist der Halter als L-förmiges Profil ausgebildet, wobei dieser Halter mittels einer Schraube und einer Distanzhülse an einer Wand angebracht werden kann. Der kurze Abschnitt des L-förmigen Halters verläuft im Wesentlichen parallel zu einer Aufhängleistenlängsrichtung, und die Aufhängleiste kann beim Montieren der Aufhängeinrichung auf dem kurzen Abschnitt des L-förmigen Halters abgestützt werden. Um die Aufhängleiste in der abgestützten Stellung auf dem L-förmigen Halter endgültig zu sichern, wird von oben eine U-förmige Klammer über die Aufhängleiste und den Halter geschoben, so dass die Aufhängleiste zwischen einer Innenseite eines Schenkels des U-förmigen Verschlusselements und dem L-förmigen Halter festgelegt ist und nicht vom Halter herunterfallen kann.

Die L-Form des Halters bildet bei dieser bekannten Aufhängeinrichung eine Art Leistenaufnahme, auf welcher die Aufhängleiste bei der Montage zwischenzeitlich abgestützt werden kann. Allerdings muss die Aufhängleiste in diesem Zustand durch eine Bedienperson bzw. einen Monteur manuell festgehalten werden, damit sie nicht vom Halter herabfällt. Somit ist die Montage erschwert, was insbesondere bei längeren Aufhängleisten, welche an mehreren Haltern befestigt werden sollen, ungünstig ist, da die Bedienperson an jedem Halter ein Verschlusselement zur Hand haben muss, um die Aufhängleiste umgehend sichern zu können. Sobald das Verschlusselement angebracht ist, ist die Aufhängleiste gegen eine Bewegung entlang ihrer Längsrichtung fixiert, so dass ein Nachjustieren der Lage der Aufhängleiste relativ zu den in der Wand befindlichen Haltern nur schwer möglich ist. Ferner besteht die Gefahr, dass die Aufhängleiste, welche in der Regel aus einem Metall, insbesondere Edelstahl hergestellt ist, bei einer derartigen Verschiebung mit angebrachtem Verschlusselement ggf. verkratzt wird.

Die DE 296 03 305 U1 offenbart einen Halter gemäß dem Oberbegriff des Anspruchs 1. Die Aufhängleiste wird hierbei in einer zwischen zwei Abschnitten des Halters, einem Basisabschnitt und einem Deckelabschnitt, gebildeten Leistenaufnahme aufgenommen.

Aufgabe der Erfindung ist es, einen gattungsgemäßen Halter derart weiterzubilden, dass die Montage und Handhabung vereinfacht wird.

Diese Aufgabe wird durch einen Halter gemäß Anspruch 1 gelöst.

Die Leistenaufnahme dient bei einer derartigen Ausgestaltung des Halters also dazu, dass eine Aufhängleiste zwischenzeitlich oder provisorisch am Halter angebracht werden kann, ohne dass sie von einer Bedienperson bzw. einem Monteur manuell festgehalten werden muss. Vielmehr ist die Aufhängleiste in der Leistenaufnahme leicht eingeklemmt, so dass sie nicht selbsttätig aus dem Halter herausfallen kann. Hierdurch wird die Montage deutlich vereinfacht, und ferner ist es möglich, dass eine über mehrere Halter durchgehende Aufhängeinrichung in ihrer Lage relativ zu den Haltern noch entlang ihrer Längsrichtung bewegt bzw. justiert werden kann, da die Aufhängleiste nur in den Leistenaufnahmen der verschiedenen Halter leicht festgeklemmt ist, aber noch nicht mittels eines Verschlusselements definitiv fixiert worden ist. Die Leistenaufnahme ist auch derart ausgebildet, dass an einem einzigen Halter zwei aneinanderstoßende Aufhängleisten angeordnet und klemmend provisorisch festgehalten werden können, ohne dass das Festklemmen der einen Aufhängleiste sich wesentlich auf das Festklemmen der anderen Aufhängleiste auswirkt.

Der Halter ist bevorzugt blockartig ausgebildet mit einer im Wesentlichen zentral angeordneten Durchgangsbohrung zum Einführen und versenkten Festziehen einer Schraube. Dabei weist die Durchgangsbohrung in axialer Richtung einen radial nach innen weisenden Vorsprung auf, an dem ein Schraubenkopf anliegt, um den Halter an einer Wand sicher befestigen zu können. Vorzugsweise ist die Bohrung als Langloch ausgeführt, um bei der Montage des Halters an der Wand gegebenenfalls Montageungenauigkeiten, z. B. Löcher auf unterschiedlichen Höhen in der Wand, ausgleichen zu können.

Vorzugsweise ist die Leistenaufnahme einstückig mit dem Halter ausgebildet, wobei der Halter insbesondere aus Kunststoff hergestellt ist. Ein derartiger blockartiger Halter mit einstückig ausgebildeter Leistenaufnahme aus Kunststoff kann als einfaches Spritzgussbauteil oder dgl. gefertigt werden. Ferner weist die Halterung aus Kunststoff den Vorteil auf, dass die darin aufgenommene Aufhängleiste aus einem Metall, insbesondere Edelstahl, nicht verkratzt. Als Kunststoff kann beispielsweise POM oder dgl. zum Einsatz kommen.

Für eine plane Auflage des Halters an einer Wand wird vorgeschlagen, dass der Halter eine hintere Stirnseite zur Abstützung an einer Wand aufweist. Ferner weist der Halter eine hierzu entgegengesetzte vordere Stirnseite auf, wobei die Leistenaufnahme bevorzugt an dieser vorderen Stirnseite vorgesehen bzw. ausgebildet ist.

Die Leistenaufnahme weist, bezogen auf eine Normalausrichtung des Halters im angebrachten Zustand an einer Wand, wenigstens einen unteren Klemmvorsprung und wenigstens einen oberen Klemmvorsprung auf, zwischen denen die Aufhängleiste festklemmbar ist. Diese beiden Klemmvorsprünge sind derart dimensioniert, dass die Aufhängleiste von vorne zwischen die beiden Klemmvorsprünge eingeführt und durch leichtes Drücken zwischen diese beiden Klemmvorsprünge aufgenommen werden kann, so dass die Aufhängleiste provisorisch zwischen den Klemmvorsprüngen gehalten ist.

Ferner weist erfindungsgemäß der untere Klemmvorsprung ein im Querschnitt U-förmiges Profil auf.

Vorzugsweise sind der hintere Schenkel des U-Profils des unteren Klemmvorsprungs von einem unteren Abschnitt der vorderen Stirnseite und dessen vorderer Schenkel von einer im Wesentlichen vertikalen vorderen Anschlagfläche gebildet, die untereinander mit einer im Wesentlichen horizontalen Auflagefläche verbunden sind.

Ferner weist der obere Klemmvorsprung eine im Wesentlichen horizontale obere Anschlagfläche und eine daran anschließende nach oben geneigt verlaufende Führungsfläche auf.

Die so ausgebildeten Klemmvorsprünge ermöglichen das Einführen einer Aufhängleiste von oben in den U-förmigen unteren Klemmvorsprung und dann ein Verkippen der im unteren Klemmvorsprung abgestützten Aufhängleiste um ihre untere Kante bzw. ihren unteren Rand, so dass sie mit ihrem oberen Rand mit der nach unten weisenden Anschlagfläche des oberen Klemmvorsprungs in Berührung kommt. Dieser Einführvorgang wird vereinfacht und unterstützt durch die geneigt verlaufenden Führungsfläche des oberen Klemmvorsprungs, welcher das schräge Einführen und anschließende Verkippen in eine im Wesentlichen vertikale Position der Aufhängleiste ermöglicht.

Gemäß einer bevorzugten Ausführungsform weist der Halter einen über die gesamte Breite des Halters durchgehenden unteren Klemmvorsprung und zwei in Breitenrichtung außen angeordnete obere Klemmvorsprünge auf. Eine derartige Ausgestaltung ermöglicht es, dass zwei Aufhängleisten, welche im Bereich des Halters bzw. der Leistenaufnahme mit ihren jeweiligen längsseitigen Stirnseiten aneinanderstoßen, gemeinsam durch den durchgehenden unteren Klemmvorsprung getragen werden und von oben durch einen jeweiligen äußeren oberen Klemmvorsprung klemmend beaufschlagt werden. Dies führt zu einer im Wesentlichen unabhängigen klemmenden Sicherung der beiden Aufhängleisten, wobei eine aus ihrer normalerweise vertikalen Stellung verkippte Aufhängleiste keinen oder kaum Auswirkungen auf die andere Aufhängleiste hat.

Die vordere Stirnseite des Halters kann durch das in den Halter einschiebbare Verschlusselement abgedeckt werden, wobei das Verschlusselement vorzugsweise aus Kunststoff hergestellt ist. Dabei kann der gleiche Kunststoff verwendet werden wie beim Halter selbst, so dass sich ein angenehmes äußeres Erscheinungsbild des Halters ergibt. Am Verschlusselement kann ggf. auch eine Blende oder dgl. aus Metall, insbesondere dem gleichen Metall wie die Aufhängleiste, vorgesehen sein, so dass bei angebrachtem Verschlusselement der Eindruck einer durchgehenden Metallleiste entsteht.

Das Verschlusselement ist vorzugsweise mit einem Führungsabschnitt in einer im Block ausgebildeten Linearführung aufgenommen und mit einem Eingriffsabschnitt greift es in den unteren Klemmvorsprung ein. Der Führungsabschnitt ist dabei im Wesentlichen T-förmig ausgeführt und greift in eine im Halter ausgebildete korrespondierende T-förmige Aufnehmung ein, wobei die T-Form ersichtlich ist, wenn auf den Halter von oben draufgeschaut wird. Der Führungsabschnitt ist dabei im oberen Bereich auf der Rückseite des Verschlusselements, also auf der dem Halter zugewandten Seite vorgesehen. Der Eingriffsabschnitt hintergreift vorzugsweise den vorderen Schenkel des U-förmigen Profils des unteren Klemmvorsprungs, so dass das Verschlusselement mittels des Führungsabschnitts und des Eingriffsabschnitts fest mit dem Halter verbunden ist, wodurch die Aufhängleiste gegen Herausfallen gesichert ist. Um im fertig montierten Zustand ein Verschieben der Aufhängleiste entlang ihrer Längsrichtung zu verhindern bzw. zu erschweren, um insbesondere unabsichtliches Verschieben der Aufhängleiste zu verhindern, wird vorgeschlagen, dass an der vorderen Stirnseite des Halters wenigstens ein elastisch verformbares Pufferelement vorgesehen ist, das etwas über die vordere Stirnseite vorsteht und bei aufgenommener Leiste mit deren Rückseite in Berührung steht. Wenn das Verschlusselement dann von vertikal oben in den Halter eingeschoben wird, ist das Pufferelement bei in den Halter eingesetztem Verschlusselement und eingesetzter Leiste verformt, so dass es die Leiste gegen das mit dem Halter in Eingriff befindliche Verschlusselement vorspannt, um die Leiste im Wesentlichen rutschfest im Halter zu fixieren. Das Pufferelement ist vorzugsweise aus einem Kunststoff, beispielsweise aus Santopren oder dgl. hergestellt.

Die Erfindung betrifft ferner eine Aufhängeinrichtung für Küchenutensilien, umfassend wenigstens einen Halter mit wenigstens einem der zuvor beschriebenen Merkmale und mit wenigstens einer am Halter angebrachten Aufhängleiste.

Bei einer solche Aufhängeinrichung können an einem Halter zwei Aufhängleisten mit ihren jeweiligen Endabschnitten, die vorzugsweise aneinanderstoßen, angebracht sein, wobei die beiden Aufhängleisten in der Leistenaufnahme des Halters getrennt voneinander festklemmbar sind.

Die in die Leistenaufnahme des Halters eingesetzte Aufhängleiste ist bei einer derartigen Aufhängeinrichung in Leistenlängsrichtung relativ zum Halter und zur Leistenaufnahme verschieblich, so dass eine nachträgliche Verschiebung der Aufhängleiste relativ zu den Haltern einfach möglich ist.

Die Erfindung wird nachfolgend beispielhaft und nicht einschränkend anhand einer Ausführungsform unter Bezugnahme auf die anliegenden Zeichnungen beschrieben.
- Fig. 1: zeigt eine perspektivische schematische Darstellung einer Ausführungsform des erfindungsgemäßen Halters zusammen mit einer Schraube und einem Dübel.
- Fig. 2: zeigt den Halter der Fig. 1 mit in einer Leistenaufnahme aufgenommener Aufhängleiste.
- Fig. 3: zeigt den Halter und die Aufhängleiste gemäß Fig. 2 mit einem Verschlusselement kurz vor dessen Verriegelung.
- Fig. 4: zeigt einen Schnitt entlang der Schnittlinie IV-IV der Fig. 3, wobei das Verschlusselement in seiner Endstellung dargestellt ist.
- Fig. 5: zeigt eine Schnittdarstellung entsprechend dem Schnitt V-V der Fig. 1.
- Fig. 6a und 6b: zeigen schematisch das Einführen und Festklemmen einer Aufhängleiste in einem Halter.
- Fig. 7: zeigt die Aufnahme von zwei aneinanderstoßenden Aufhängleisten in einem Halter.
- Fig. 8: zeigt die Verwendung von zwei Haltern entlang einer durchgehenden längeren Aufhängleiste.

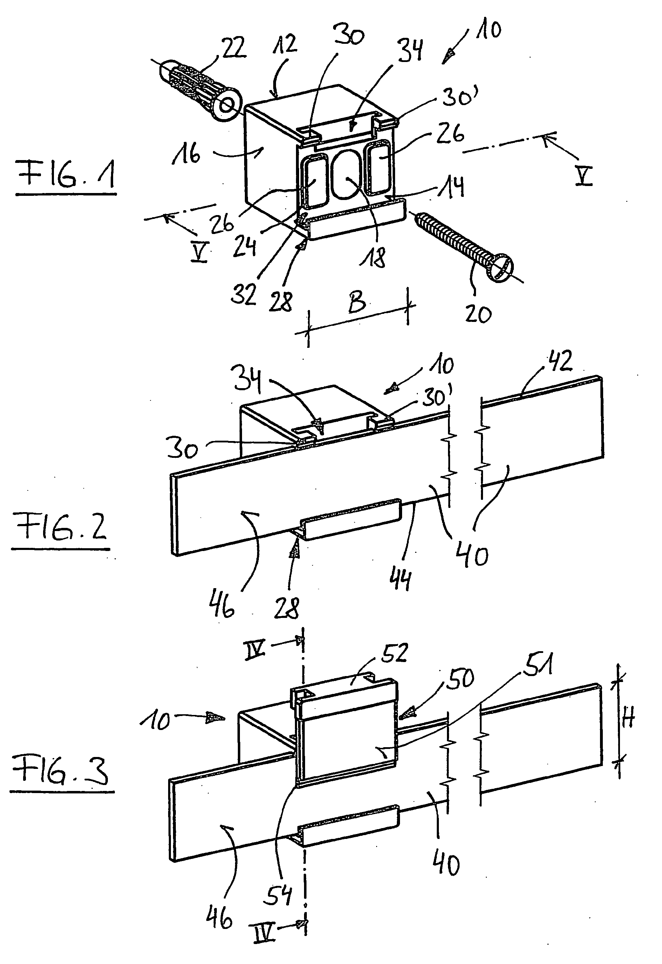

Fig. 1 zeigt in perspektivischer schematischer Darstellung einen Halter 10, der blockförmig, hier als Quader ausgebildet ist. Der Halter 10 weist eine hintere Stirnseite 12 und eine vordere Stirnseite 14 auf, die durch Seitenwände 16 miteinander verbunden sind. An der vorderen Stirnseite 14 ist eine Durchgangsbohrung 18 dargestellt, durch welche eine Schraube 20 hindurchgesteckt werden kann, so dass sie ggf. unter Zuhilfenahme eines Dübels 22 in eine Wand geschraubt werden kann, so dass der Halter 10 an der Wand befestigt ist. Ferner sind an der vorderen Stirnseite 14 zwei links und rechts der Durchgangsbohrung 18 angeordnete Öffnungen 24 ersichtlich, in denen zwei elastische Pufferelemente 26 angeordnet sind.

An der vorderen Stirnseite 14 ist ferner ein unterer Klemmvorsprung 28 ausgebildet, welcher sich über die gesamte Breite B des Halters 10 erstreckt. Am oberen Rand der vorderen Stirnseite 14 des Halters 10 sind zwei obere Klemmvorsprünge 30, 30' ausgebildet, so dass durch den unteren Klemmvorsprung 28 und die oberen Klemmvorsprünge 30, 30' eine Leistenaufnahme 32 gebildet wird. Die beiden oberen Klemmvorsprünge 30, 30' sind nur in den seitlichen Außenbereichen des Halters 10 angeordnet, so dass zwischen ihnen ein Freiraum 34 gebildet ist.

Fig. 2 zeigt den Halter gemäß Fig. 1 mit in der Leistenaufnahme 32, also zwischen dem unteren Klemmvorsprung 28 und den oberen Klemmvorsprüngen 30, 30' aufgenommener Aufhängleiste 40. In der in Fig. 2 dargestellten Situation ist die Aufhängleiste 40 durch die Klemmvorsprünge 28, 30, 30' an ihren oberen und unteren Rändern 42 bzw. 44 klemmend beaufschlagt, so dass sie zumindest temporär bzw. provisorisch gegen ein Herausfallen aus dem Halter 10 gesichert ist. Eine derartige Sicherung der Aufhängleiste 40 am Halter 10 vereinfacht dabei die Montage einer Aufhängeinrichung für Küchenutensilien unter Verwendung von Haltern 10 und Aufhängleisten 40.

Fig. 3 zeigt das Anbringen eines Verschlusselements 50, das nach Einsetzen der Aufhängleiste 40 in den Halter 10 von oben im Wesentlichen vertikal entlang der Vorderseite 46 der Aufhängleiste 40 nach unten bewegt wird. Das Verschlusselement 50 weist in seinem oberen Endbereich einen insbesondere T-förmig oder Doppel-T-förmig ausgeführten Führungsabschnitt 52 auf, der in den zwischen den oberen Klemmvorsprüngen 30, 30' im Halter 10 ausgebildeten Freiraum 34 eingreift. Der Freiraum 34 weist dabei eine zur Form des Führungsabschnitts 52 korrespondierende Form auf, so dass der Führungsabschnitt 52 und der Freiraum 34 miteinander in Formschluss gebracht werden können. Das Verschlusselement 50 weist an seinem unteren Rand einen Rücksprung 54 auf, mit welchem es im verschlossenen Zustand, in welchem das Verschlusselement 50 die Aufhängleiste 40 abdeckt, mit dem unteren Klemmvorsprung 28 in Eingriff steht. Selbstverständlich können der Führungsabschnitt 52 und der Freiraum 34 auch eine andere Form aufweisen, die einen Formschluss von Verschlusselement und Halter ermöglicht.

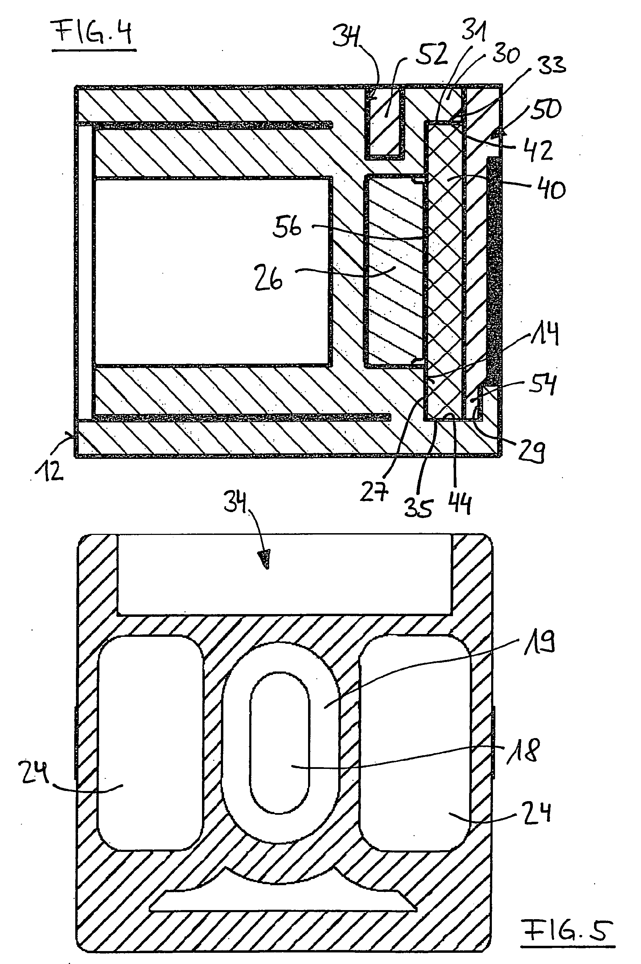

Eine vollständig montierte Situation mit dem Verschlusselement 50 in Schließstellung ist aus dem Querschnitt der Fig. 4 ersichtlich (Schnittlinie IV-IV von Fig. 3). Das Verschlusselement 50 hintergreift mit seinem Führungsabschnitt 52 die Klemmvorsprünge 30, 30', wobei in der Fig. 4 nur der obere Klemmvorsprung 30 ersichtlich ist. Der obere Klemmvorsprung 30 weist eine im Wesentlichen horizontale Anschlagfläche 31 auf, an welcher der obere Rand 42 der Aufhängleiste 40 anliegt. Nach oben hin schließt sich an die Anschlagsfläche 31 eine geneigte Führungsfläche 33 an, welche das Einführen der Aufhängleiste 40 in die Leistenaufnahme 32 erleichtert. Der untere Klemmvorsprung 28 ist im Wesentlichen U-förmig ausgebildet, wobei ein hinterer Schenkel 27 durch einen unteren Abschnitt der vorderen Stirnwand 14 gebildet wird. Der vordere Schenkel des U-förmigen Profils wird durch eine im Wesentlichen vertikal vordere Anschlagfläche 29 gebildet, wobei der hintere Schenkel 27 und der vordere Schenkel 29 mittels einer im Wesentlichen horizontal verlaufenden Auflagefläche 35 verbunden sind. Auf dieser Auflagefläche 35 liegt der untere Rand 44 der Aufhängleiste 40 auf. Aus der Schnittdarstellung gemäß Fig. 4 ist ersichtlich, dass das Verschlusselement 50 mit seinem Rücksprung 54 den vorderen Schenkel 29 des U-förmigen Klemmvorsprungs 28 hintergreift, so dass aufgrund des Formschlusses zwischen Führungsabschnitt 52 und Freiraum 34 sowie zwischen dem Rücksprung 54 und dem vorderen Schenkel 29 des U-Profils das Verschlusselement 50 am Halter 10 fixiert ist und nur vertikal nach oben aus dieser Schließstellung bewegt werden kann. Somit ist die Aufhängleiste 40 in dieser Schließstellung des Verschlusselements 50 gegen Herausfallen aus dem Halter 10 definitiv gesichert.

In dieser Schließstellung werden auch die elastischen Puffer 26 aufgrund der durch das Verschlusselement 50 auf die Aufhängleiste 40 wirkenden Kräfte in Richtung zur hinteren Stirnseite 12 zusammengedrückt, so dass sie in komprimiertem Zustand an der Rückseite 56 der Leiste 40 anliegen und nicht über die vordere Stirnseite 14 vorstehen. Die Puffer 26 sind vorzugsweise aus Kunststoff, beispielsweise Santopren oder dgl. hergestellt. Die elastischen Puffer 26 üben im komprimierten Zustand eine Vorspannkraft in Richtung des Verschlusselements 50 auf die Aufhängleiste 40 aus, so dass diese im Wesentlichen unverschieblich in Längsrichtung der Aufhängleiste 40 gehalten ist. Da sowohl der Halter 10 als auch das Verschlusselement 50 und die elastischen Puffer 26 aus Kunststoff hergestellt sind, besteht keine Gefahr, dass die Aufhängleiste 40, welche vorzugsweise aus Metall, insbesondere Edelstahl, hergestellt ist, im Bereich der Halter verkratzt wird.

Fig. 5 zeigt eine Schnittdarstellung von vorne entsprechend der Schnittlinie V-V der Fig. 1. Aus dieser Darstellung sind die beiden Öffnungen 24 für die elastischen Pufferelemente ersichtlich. Die Durchgangsbohrung 18 weist einen Vorsprung 19 auf, auf welchem ein Schraubenkopf mit seiner Unterseite liegen kann zum Befestigen des Halters 10 an einer Wand. Es ist klar, dass die Durchgangsbohrung 18 so ausgestaltet ist, dass die Schraube 20 versenkt festgezogen werden kann, so dass sie nicht in Richtung der vorderen Stirnseite 14 vorsteht. Oberhalb der Öffnungen 24 und der Durchgangsbohrung 18 ist der Freiraum 34 ersichtlich, welche den Führungsabschnitt 52 des Verschlusselements 50 aufnimmt.

Der Halter 10 ist vorzugsweise als Gussteil oder Spritzgussteil aus einem Kunststoff, insbesondere POM, hergestellt. Dies gilt auch für das Verschlusselement 50, so dass im verschlossenen Zustand der Halter 10 und das Verschlusselement 52 einen von außen gesehen im Wesentlichen geschlossenen und regelmäßigen Quader bzw. Würfel bilden, der im Bereich der Leistenaufnahme 42 von einer Aufhängleiste 40 durchsetzt werden kann. Auf der Vorderseite 51 des Verschlusselements 50 (Fig. 3) kann ggf. eine Blende oder ein Designelement aus einem anderen Werkstoff, beispielsweise Metall, insbesondere Edelstahl, vorgesehen werden, so dass auch im Bereich des Halters der Eindruck einer durchgehenden Metallleiste entsteht.

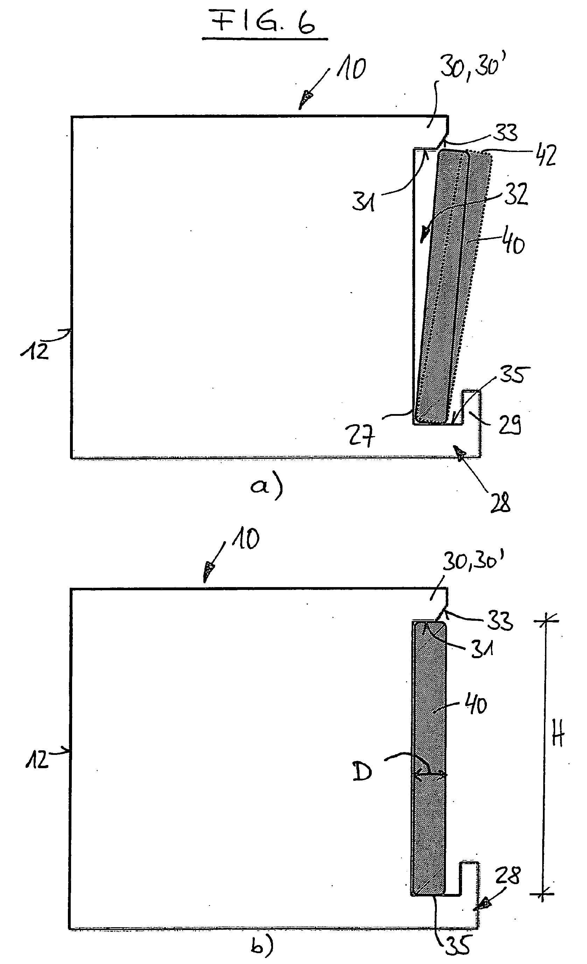

Die Fig. 6a und 6b zeigen stark vereinfacht und schematisch das Einsetzen und provisorische Festklemmen einer Aufhängleiste 40 in die Leistenaufnahme 32 des Halters 10. Die Aufhängleiste 40 wird, wie punktiert in der Fig. 6a dargestellt, zuerst mit ihrem unteren Rand auf der Auflagefläche 35 abgestützt. Danach wird sie nach hinten in Richtung zur Leistenaufnahme 32 verkippt (durchgezogen dargestellt in Fig. 6a). Dabei kann der obere Rand 42 der Aufhängleiste 40 entlang der Führungsfläche 33 am oberen Klemmvorsprung 30 bzw. 30' vorbei eingeführt werden. Dieser Zustand ist in Fig. 6b dargestellt. Die Aufhängleiste 40 ist in diesem Zustand zwischen dem unteren Klemmvorsprung 28 und dem oberen Klemmvorsprung 30, 30' aufgenommen und wird von der Auflagefläche 35 und der Anschlagfläche 31 klemmend beaufschlagt, so dass ein Herausfallen der Aufhängleiste 40 aus dem Halter 10 wenigstens temporär bzw. provisorisch verhindert ist, um die Montage zu vereinfachen. Es ist klar, dass die Dimensionierung der Leistenaufnahme 32 derart auf die Dimension der Aufhängleiste 40, insbesondere deren Höhe H und Dicke D abgestellt ist, dass die gewünschte leichte Klemmwirkung erreicht werden kann, ohne dass beim Einsetzen der Aufhängleiste 40 in die Leistenaufnahme 30 hohe Kräfte zu überwinden sind, insbesondere bei Einschieben bzw. Eindrücken des oberen Rands 42 unter den oberen Klemmvorsprung 30 bzw. 30'.

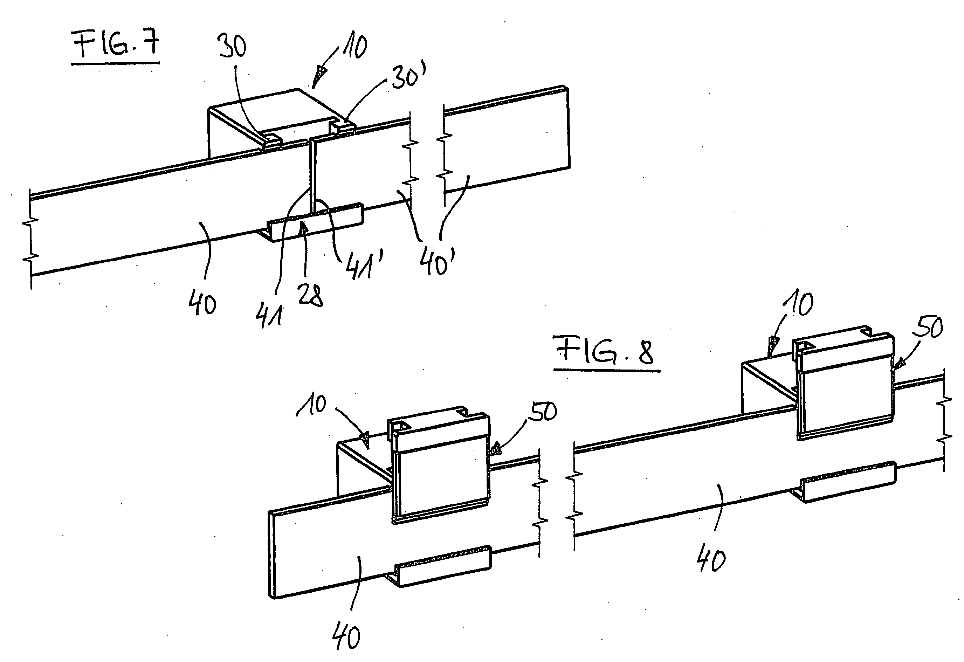

Das Vorsehen von zwei voneinander getrennten oberen Klemmvorsprüngen 30, 30' bietet die Möglichkeit, dass an einem Halter 10 zwei Aufhängleisten 40, 40' mit ihren jeweiligen Enden 41, 41' aufgenommen werden, wobei diese Enden 41, 41' auch aneinander anliegen können. Diese Situation ist in Fig. 7 dargestellt. Die Aufhängleiste 40 wird durch den oberen Klemmvorsprung 30 und die linke Hälfte des unteren Klemmvorsprungs 28 provisorisch festgeklemmt, und die rechte Aufhängleiste 40' wird durch den oberen Klemmvorsprung 30' und die rechte Hälfte des unteren Klemmvorsprungs 28 gehalten. Sobald das Verschlusselement 50 (siehe Fig. 3) am Halter 10 angebracht worden ist, ist die Stoßstelle zwischen den Enden 41, 41' nicht mehr sichtbar. Somit ermöglicht ein Halter 10 den Aufbau von beliebig langen Aufhängeinrichungen unter Verwendung mehrerer aneinander anstoßender Aufhängleisten 40, 40'. Durch die Verwendung von zwei Pufferelementen 26 wird die Sicherung jeder Aufhängleiste 40, 40' bei aufgesetztem Verschlusselement noch komplettiert, da jeder Leiste 40, 40' ein Pufferelement zugeordnet ist.

Fig. 8 zeigt der Vollständigkeit halber eine Situation, bei welcher zwei Halter 10 in einem vorbestimmten Abstand voneinander an einer Wand befestigt worden sind, und eine durchgehende Aufhängleiste 40 ist in beiden Haltern 10 aufgenommen und wird nun mittels der Verschlusselemente 50 definitiv befestigt.

Anzumerken ist noch, dass die Befestigungsart gemäß Fig. 7 auch das Ausgleichen von Montagetoleranzen ermöglicht, wenn beispielsweise benachbarte Halter 10 um wenige Millimeter nicht auf der gleichen Höhe angebracht sind, so dass eine Aufhängleiste 40 bzw. 40' von einem ersten Halter zu einem nächsten Halter etwas geneigt verläuft, wenn man den Verlauf des oberen bzw. unteren Randes 42, 44 mit einer idealen Horizontale vergleicht. Ein weiterer Vorteil der provisorischen klemmenden Sicherung, wie sie in den Fig. 2 und 7 dargestellt ist, ist darin zu sehen, dass die Aufhängleiste 40 relativ zum Halter 10 entlang ihrer Längsrichtung noch verschoben werden kann, um ihre Lage ggf. etwas zu justieren. Dabei kann die Aufhängleiste 40 problemlos verschoben werden, ohne dass Gefahr besteht, dass Kratzspuren an ihr entstehen, da der Halter 10 aus Kunststoff hergestellt ist.

## Patentansprüche

1. Halter einer Aufhängeinrichung für Küchenutensilien, wobei der Halter (10) an einer Wand befestigbar ist und derart ausgebildet ist, dass an ihm wenigstens eine Aufhängleiste (40) zum Anhängen von Küchenutensilien anbringbar ist, und wobei der Halter (10) ein Verschlusselement (50) umfasst, das eine im Halter (10) aufgenommene Aufhängleiste (40) abdeckt und diese gegen Herausfallen aus einer am Halter (10) ausgebildeten Leistenaufnahme (32) sichert,
**dadurch gekennzeichnet, dass** die Leistenaufnahme (32) derart ausgebildet ist, dass eine darin angeordnete Aufhängleiste (40) klemmend beaufschlagt ist, so dass die Aufhängleiste (40) allein durch die Leistenaufnahme (32) zumindest temporär am Halter (10) fixierbar ist, wobei die Leistenaufnahme (32) bezogen auf eine Normalausrichtung des Halters (10) wenigstens einen unteren Klemmvorsprung (28) und wenigstens einen oberen Klemmvorsprung (30, 30') aufweist, zwischen denen die Aufhängleiste (40) festklemmbar ist, wobei der untere Klemmvorsprung (28) ein im Querschnitt U-förmiges Profil aufweist und wobei der obere Klemmvorsprung (30, 30') eine im Wesentlichen horizontale obere Anschlagfläche (31) aufweist und eine daran anschließende nach oben geneigt verlaufende Führungsfläche (33).

2. Halter nach Anspruch 1, **dadurch gekennzeichnet, dass** der Halter (10) blockartig ausgebildet ist mit einer im Wesentlichen zentral angeordneten Durchgangsbohrung (18) zum Einführen und versenkten Festziehen einer Schraube (20).

3. Halter nach Anspruch 1 oder 2, **dadurch gekennzeichnet, dass** die Leistenaufnahme (32) einstückig mit dem Halter (10) ausgebildet ist, wobei der Halter (10) vorzugsweise aus Kunststoff hergestellt ist.

4. Halter nach einem der Ansprüche 1 bis 3, **dadurch gekennzeichnet, dass** der Halter (10) eine hintere Stirnseite (12) zur Abstützung an einer Wand und eine vordere Stirnseite (14) umfasst, wobei die Leistenaufnahme (32) an der vorderen Stirnseite (14) vorgesehen ist.

5. Halter nach Anspruch 4, **dadurch gekennzeichnet, dass** der hintere Schenkel (27) des U-Profils des unteren Klemmvorsprungs (28) von einem unteren Abschnitt der vorderen Stirnseite (14) und dessen vorderer Schenkel (29) von einer im Wesentlichen vertikalen vorderen Anschlagfläche gebildet sind, die untereinander mit einer im Wesentlichen horizontalen Auflagefläche (35) verbunden sind.

6. Halter nach Anspruch 4 oder 5, **dadurch gekennzeichnet, dass** er einen über die gesamte Breite (B) des Halters (10) durchgehenden unteren Klemmvorsprung (28) und zwei in Breitenrichtung außen angeordnete obere Klemmvorsprünge (30, 30') aufweist.

7. Halter nach einem der Ansprüche 4 bis 6, **dadurch gekennzeichnet, dass** die vordere Stirnseite (14) des Halters (10) durch das in den Halter (10) einschiebbare Verschlusselement (50) abdeckbar ist, wobei das Verschlusselement (50) vorzugsweise aus Kunststoff hergestellt ist.

8. Halter nach Anspruch 7, **dadurch gekennzeichnet, dass** das Verschlusselement (50) mit einem Führungsabschnitt (52) in einer im Halter (10) ausgebildeten Linearführung (34) aufgenommen ist und mit einem Eingriffsabschnitt (54) in den unteren Klemmvorsprung (28) eingreift.

9. Halter nach Anspruch 7 oder 8, **dadurch gekennzeichnet, dass** an der vorderen Stirnseite (14) wenigstens ein elastisch verformbares Pufferelement (26) vorgesehen ist, das etwas über die vordere Stirnseite (14) vorsteht und bei aufgenommener Leiste (40) mit deren Rückseite (56) in Berührung steht.

10. Halter nach Anspruch 9, **dadurch gekennzeichnet, dass** das Pufferelement (26) bei in den Halter (10) eingesetztem Verschlusselement (50) und eingesetzter Leiste (40) verformt ist, so dass es die Leiste (40) gegen das mit dem Halter (10) in Eingriff befindliche Verschlusselement (50) vorspannt, um die Leiste (40) im Wesentlichen rutschfest im Halter (10) zu fixieren.

11. Aufhängeinrichtung für Küchenutensilien, umfassend wenigstens einen Halter (10) nach einem der vorhergehenden Ansprüche und wenigstens eine am Halter (10) angebrachte Aufhängleiste (40).

12. Aufhängeinrichtung nach Anspruch 11, **dadurch gekennzeichnet, dass** an einem Halter (10) zwei Aufhängleisten (40, 40') mit ihren jeweiligen Endabschnitten (41, 41'), die vorzugsweise aneinanderstoßen, angebracht sind, wobei die beiden Aufhängleisten (40, 40') in der Leistenaufnahme (42) des Halters (10) getrennt voneinander festklemmbar sind.

13. Aufhängeinrichtung nach Anspruch 11 oder 12, **dadurch gekennzeichnet, dass** eine in die Leistenaufnahme (42) des Halters (10) eingesetzte Aufhängleiste (40) in Leistenlängsrichtung relativ zum Halter (10) und der Leistenaufnahme (42) verschieblich ist.

## Claims

1. Holder of a hanger device for kitchen utensils, the holder (10) being able to be fixed to a wall and being formed in such a way that at least one hanging rail (40) can be attached thereto for hanging kitchen utensils, and the holder (10) comprising a fastening element (50) which covers a hanging rail (40) accommodated in the holder (10) and secures said rail against falling out of a rail retainer (32) formed on the holder (10),
**characterised in that** the rail retainer (32) is formed in such a way that a hanging rail (40) arranged therein is applied in a clamp-like manner, such that the hanging rail (40) can be fixed at least temporarily to the holder (10) solely by the rail retainer (32), the rail retainer (32) comprising, in relation to a normal orientation of the holder (10), at least one lower clamping projection (28) and at least one upper clamping projection (30, 30'), between which the hanging rail (40) can be clamped, the lower clamping projection (28) having a U-shaped profile in cross section and the upper clamping projection (30, 30') having a substantially horizontal upper stop surface (31) and a guide surface (33) which adjoins said stop surface and extends upwards in an inclined manner.

2. Holder according to claim 1, **characterised in that** the holder (10) is formed as a block having a through-hole (18), which is arranged substantially centrally, for inserting and tightening a screw (20) in a countersunk manner.

3. Holder according to either claim 1 or claim 2, **characterised in that** the rail retainer (32) is formed in one piece with the holder (10), the holder (10) preferably being made of plastics material.

4. Holder according to any of claims 1 to 3, **characterised in that** the holder (10) comprises a rear end face (12) for being supported on a wall and a front end face (14), the rail retainer (32) being provided on the front end face (14).

5. Holder according to claim 4, **characterised in that** the rear limb (27) of the U-shaped profile of the lower clamping projection (28) is formed by a lower portion of the front end face (14) and the front limb (29) of said projection is formed by a substantially vertical front stop face, which limbs are interconnected by a substantially horizontal support face (35).

6. Holder according to either claim 4 or claim 5, **characterised in that** it has a continuous lower clamping projection (28) over the entire width (B) of the holder (10) and two upper clamping projections (30, 30') arranged outwardly in the width direction.

7. Holder according to any of claims 4 to 6, **characterised in that** the front end face (14) of the holder (10) can be covered by the fastening element (50) which can be slid into the holder (10), the fastening element (50) preferably being made of plastics material.

8. Holder according to claim 7, **characterised in that** the fastening element (50) is accommodated in a linear guide (34) formed in the holder (10) by means of a guide portion (52) and engages in the lower clamping projection (28) by means of an engagement portion (54).

9. Holder according to either claim 7 or claim 8, **characterised in that**, on the front end face (14), at least one resiliently deformable buffer element (26) is provided which projects slightly beyond the front end face (14) and which, when a rail (40) is accommodated, is in contact with the rear side (56) thereof.

10. Holder according to claim 9, **characterised in that** the buffer element (26) is deformed when the fastening element (50) and the rail (40) are inserted into the holder, in such a way that it biases the rail (40) against the fastening element (50) which is engaged with the holder (10) in order to fix the rail (40) in the holder (10) in a substantially slip-free manner.

11. Hanger device for kitchen utensils, comprising at least one holder (10) according to any of the preceding claims and at least one hanging rail (40) attached to the holder (10).

12. Hanger device according to claim 11, **characterised in that** two hanging rails (40, 40') are attached to a holder (10) by the respective end portions (41, 41') thereof which preferably adjoin one another, the two hanging rails (40, 40') being able to be clamped in the rail retainer (42) of the holder (10) separately from one another.

13. Hanger device according to either claim 11 or claim 12, **characterised in that** a hanging rail (40) inserted into the rail retainer (42) of the holder (10) is displaceable in the longitudinal direction of the rail relative to the holder (10) and the rail retainer (42).

## Revendications

1. Support d'un dispositif de suspension pour des ustensiles de cuisine, le support (10) pouvant être fixé sur une paroi et est réalisé de telle manière qu'au moins une baguette de suspension (40) destinée à suspendre des ustensiles de cuisine peut être montée sur celui-ci, et le support (10) comportant un élément de fermeture (50) qui recouvre une baguette de suspension (40) reçue dans le support (10) et bloque celle-ci contre toute chute d'un logement de baguette (32) réalisé sur le support (10), **caractérisé en ce que** le logement de baguette (32) est réalisé de telle manière qu'une baguette de suspension (40) disposée dedans soit sollicitée par serrage de sorte que la baguette de suspension (40) puisse être fixée seulement par le logement de baguette (32) au moins temporairement sur le support (10), le logement de baguette (32) présentant, par rapport à une orientation normale du support (10), au moins une saillie de serrage (28) inférieure et au moins une saillie de serrage supérieure (30, 30'), entre lesquelles la baguette de suspension (40) peut être serrée, la saillie de serrage (28) inférieure présentant un profilé, dont la section transversale est en forme de U et la saillie de serrage (30, 30') supérieure présentant une surface de butée (31) supérieure sensiblement horizontale et une surface de guidage (33) finale, s'étendant inclinée vers le haut.

2. Support selon la revendication 1, **caractérisé en ce que** le support (10) est réalisé comme un bloc avec un perçage de passage (18) disposé sensiblement centralement pour l'introduction et le serrage à bloc noyé d'une vis (20).

3. Support selon la revendication 1 ou 2, **caractérisé en ce que** le logement de baguette (32) est réalisé d'un seul tenant avec le support (10), le support (10) étant de préférence fabriqué en matière plastique.

4. Support selon l'une quelconque des revendications 1 à 3, **caractérisé en ce que** le support (10) comporte un côté frontal arrière (12) pour l'appui contre une paroi et un côté frontal avant (14), le logement de baguette (32) étant prévu sur le côté frontal avant (14).

5. Support selon la revendication 4, **caractérisé en ce que** la branche arrière (27) du profilé en U de la saillie de serrage inférieure (28) est formée par une section inférieure du côté frontal avant (14) et sa branche avant (29) est formée par une surface de butée avant sensiblement verticale, lesquelles branches sont reliées entre elles par une surface d'appui (35) sensiblement horizontale.

6. Support selon la revendication 4 ou 5, **caractérisé en ce qu'**il présente une saillie de serrage (28) inférieure continue sur toute la largeur (B) du support (10) et deux saillies de serrage (30, 30') supérieures disposées à l'extérieur dans le sens de la largeur.

7. Support selon l'une quelconque des revendications 4 à 6, **caractérisé en ce que** le côté frontal avant (14) du support (10) peut être recouvert par l'élément de fermeture (50) pouvant être inséré dans le support (10), l'élément de fermeture (50) étant de préférence fabriqué en matière plastique.

8. Support selon la revendication 7, **caractérisé en ce que** l'élément de fermeture (50) est logé par une section de guidage (52) dans un guidage linéaire (34) réalisé dans le support (10) et s'engage par une section d'engagement (54) dans la saillie de serrage inférieure (28).

9. Support selon la revendication 7 ou 8, **caractérisé en ce qu'**au moins un élément tampon (26) déformable élastiquement est prévu sur le côté frontal avant (14), lequel dépasse un peu du côté frontal avant (14) et est en contact avec son côté arrière (56) lorsque la baguette (40) est logée.

10. Support selon la revendication 9, **caractérisé en ce que** l'élément tampon (26) est déformé lorsque l'élément de fermeture (50) et la baguette (40) sont insérés dans le support (10) de sorte qu'il précontraigne la baguette (40) contre l'élément de fermeture (50) se trouvant en engagement avec le support (10) afin de fixer la baguette (40) de manière sensiblement résistante au glissement dans le support (10).

11. Dispositif de suspension pour des ustensiles de cuisine, comprenant au moins un support (10) selon l'une quelconque des revendications précédentes et au moins une baguette de suspension (40) montée sur le support (10).

12. Dispositif de suspension selon la revendication 11, **caractérisé en ce que** deux baguettes de suspension (40, 40') sont montées sur un support (10) par leurs sections d'extrémité respectives (41, 41') qui sont de préférence contiguës l'une à l'autre, les deux baguettes de suspension (40, 40') pouvant être serrées à bloc séparément l'une de l'autre dans le logement de baguette (42) du support (10).

13. Dispositif de suspension selon la revendication 11 ou 12, **caractérisé en ce qu'**une baguette de suspension (40) insérée dans le logement de baguette (42) du support (10) est mobile dans le sens longitudinal de la baguette par rapport au support (10) et au logement de baguette (42).
